Europäisches Patentamt

European Patent Office

Office européen des brevets

(19)

(11) Veröffentlichungsnummer: **0 175 855**
**A2**

(12) # EUROPÄISCHE PATENTANMELDUNG

(21) Anmeldenummer: **85108182.8**

(22) Anmeldetag: **02.07.85**

(51) Int. Cl.⁴: **C 21 B 7/00**
**C 21 B 9/00**

(30) Priorität: **26.09.84 DE 3435275**

(43) Veröffentlichungstag der Anmeldung:
**02.04.86 Patentblatt 86/14**

(84) Benannte Vertragsstaaten:
**AT FR GB IT SE**

(71) Anmelder: **MANNESMANN Aktiengesellschaft**
**Mannesmannufer 2**
**D-4000 Düsseldorf 1(DE)**

(72) Erfinder: **Eisenbarth, Manfred, Ing. (grad.)**
**Landauer Strasse 80**
**D-6660 Zweibrücken(DE)**

(54) **Hochofenanlage.**

(57) In einer solchen Hochofenanlage, wobei der Hochofen insbesondere im Gegendruckverfahren betrieben wird, ist der Hochofen-Gicht eine Grobentstaubung (2) und eine Feinentstaubung (3) und zumindest eine Turbinenstufe (4, 5) nachgeordnet, außerdem ist eine Abzweigung für Gichtgas vorhanden, das unter Beimischung in einem oder mehreren Cowpern (6) verbrennbar ist, wobei den Cowpern mittels eines Kaltwindgebläses (7) Kaltluft zuführbar ist und der im Cowper (6) erzeugte Heißwind in die Düsenstöcke des Hochofens (1) einführbar ist.

Um das Hochofengichtgas als auch die Cowpergase hinsichtlich ihres Energiegehaltes besser auszunutzen, wird vorgeschlagen, daß Gichtgas zur Beheizung der Cowper (6) zwischen der Feinentstaubung (3) und vor einer der Turbinen (4,5), d.h. vor der Entspannung, abzweigbar und im Cowper (6) unter Druck verbrennbar ist.

./...

Die Erfindung betrifft eine Hochofenanlage, insbesondere mit einem im Gegendruckverfahren betriebenen Hochofen, mit einer der Hochofen-Gicht nachgeordneten Grob- und Feinentstaubung und mit zumindest einer folgenden Turbinenstufe, außerdem mit einer Abzweigung für Gichtgas, das unter Beimischung in einem oder mehreren Cowpern verbrennbar ist, wobei den Cowpern mittels eines Kaltwindgebläses Kaltluft zuführbar ist und der im Cowper erzeugte Heißwind in die Düsenstöcke des Hochofens einführbar ist.

In einer solchen Anlage wird das staubbeladene Gichtgas des Hochofens in einer Grobentstaubungseinrichtung vorgereinigt, wobei gegenüber dem Hochofen-Gichtgasdruck ein niedrigerer Druck entsteht und in einer Feinentstaubungseinrichtung endgereinigt, wobei ebenfalls ein gewisser Druckabfall hingenommen werden muß. Die im Reingas noch enthaltene Druck- und Wärmeenergie wird in der nachgeschalteten Turbinenstufe ausgenutzt, wobei im angetriebenen Generator elektrische Energie erzeugt wird.

Das aus der Turbine strömende Reingas wird unter Beimischung von Luft in einem Brenner verbrannt, und die heißen Brenngase werden dem Cowper zugeführt. Die heißen Brenngase, d.h. Rauchgase des Cowpers, werden hinter dem Cowper ohne oder unter nur geringer Nutzung der darin enthaltenen Wärmeenergie in die Atmosphäre ausgeblasen. Diese Behandlungsweise der Gichtgase bedeutet einen Energieverlust im Cowper, wobei wertvolle Energie einfach in die Atmosphäre abgegeben wird.

Der Erfindung liegt die Aufgabe zugrunde, die sowohl im Hochofengichtgas als auch in den Cowper-Gasen enthaltene Energie besser auszunutzen.

Die gestellte Aufgabe wird erfindungsgemäß dadurch gelöst, daß Gichtgas zur Beheizung der Cowper zwischen der Feinentstaubung und vor einer der Turbinen, d.h. vor der Entspannung, abzweigbar und

......

im Cowper unter Druck verbrennbar ist. Die Verbrennung der Gase im Cowper erfolgt also unter hohem Druck. Ein Umbau der Cowperanlage ist nicht erforderlich, weil Cowperanlagen bei Gegendruckhochöfen in jedem Fall unter Wind für einen entsprechend hohen Gasdruck ausgelegt sind. Die Verbrennung unter hohem Druck ist außerdem vorteilhaft, weil der Gichtgasbrenner kleiner gebaut sein kann. Hinter der Feinentstaubung beträgt die Gichtgastemperatur 90 bis 110°C, wodurch den niedrigen Heizwerten von 600 bis 650 kcal/Nm³ eine gute Zündfähigkeit gegenübersteht.

In Weiterbildung der Erfindung ist vorgesehen, daß die aus dem Cowper ausströmenden Rauchgase einer Rauchgas-Turbinenstufe zuführbar sind. Die unter hohem Druck mit einer Temperatur von über 200°C (während der Aufheizperiode der Cowper) aus einem Cowper austretenden Rauchgase geben dann noch einmal Energie in einer Turbine ab. Somit wird das im Cowper unter höherem Druck erzeugte Heizgas mit seiner Restwärme und dem höheren Druck noch verwertet.

Eine Verbesserung der Erfindung besteht ferner darin, daß einer selbständigen Rauchgasturbine ein eigener Generator zugeordnet ist.

Vorteile ergeben sich außerdem dadurch, daß die Regelung des Gegendruckes im Cowper bzw. im Hochofen parallel über die vorhandenen Turbinenstufen oder über eine Gichtgasturbine und über eine Rauchgasturbine jeweils getrennt erfolgt.

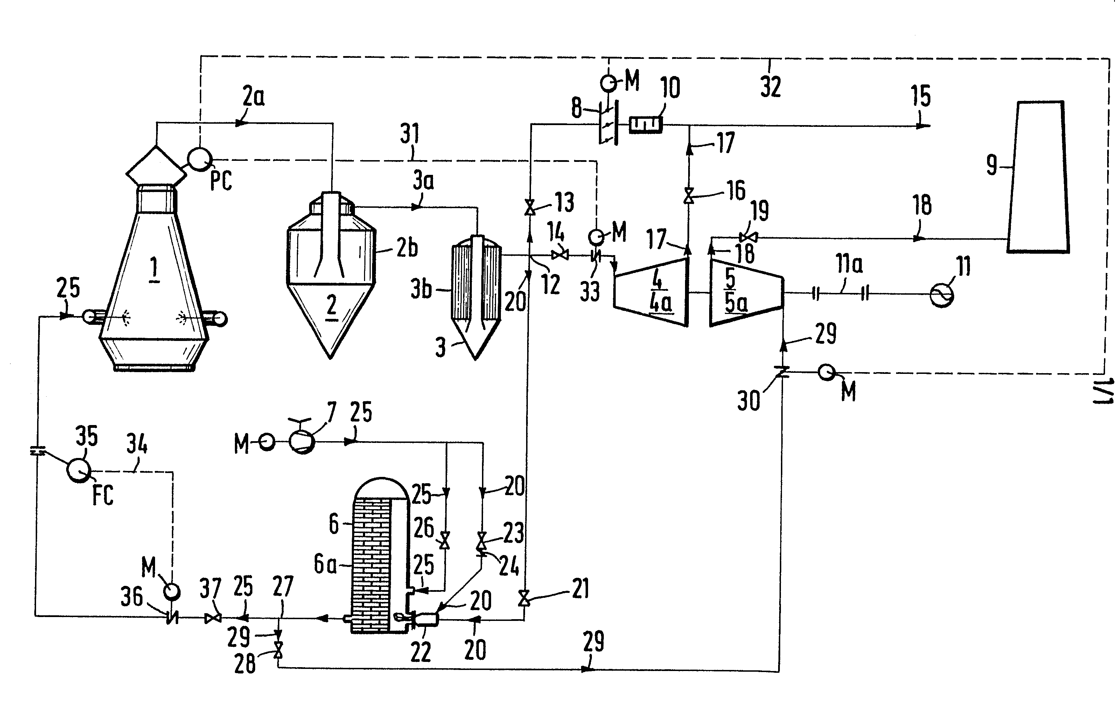

Ein Ausführungsbeispiel der Erfindung ist in der Zeichnung dargestellt und wird nachfolgend erläutert.

Die einzige Figur der Zeichnung zeigt einen Schaltplan der Hochofenanlage.

......

Aus dem Hochofen 1 strömen die staubbeladenen Gichtgase in die Grobentstaubung 2 in Pfeilrichtung 2a und von dort in Pfeilrichtung 3a in die Feinentstaubung 3. Die Grobentstaubung 2 wird hierbei von dem Staubsack 2b und die Feinentstaubung 3 durch einen Schlauchfilter 3b gebildet. Die entstaubten Gichtgase können an der Abzweigung 12 je nach Stellung der Ventile 13 und 14 sowie des Septum-Ventils 8 durch den Schalldämpfer 10 in Pfeilrichtung 15 an andere Verbraucher weitergeleitet oder in die Atmosphäre abgelassen werden, was jedoch nicht dem Normalfall entspricht.

Im Regelfall wird durch das Ventil 14 gereinigtes Gichtgas an die Turbinenstufe 4a abgegeben, die mit der weiteren Turbinenstufe 5a auf einer Welle arbeitet. Beide Turbinenstufen 4a und 5a treiben die Welle 11a des Generators 11. Aus der Turbinenstufe 4a ausströmendes Reingichtgas wird über das Regelventil 16 in Pfeilrichtung 17 in die Leitung in Pfeilrichtung 15 eingespeist und wie beschrieben behandelt.

Im gezeichneten Ausführungsbeispiel werden die Turbine 4 mit Reingichtgas und die Turbine 5 mit Rauchgas betrieben, so daß das Abgas in Pfeilrichtung 18 durch das Ventil 19 und durch den Kamin 9 ins Freie strömt.

Bei entsprechender Stellung der Ventile 13 und 14 an der Abzweigung 12 strömt Reingas in Pfeilrichtung 20 durch das geöffnete Ventil 21 in den Brenner 22 des Cowpers 6. Aus dem Kaltwindgebläse 7 des Hochofens 1 wird im Brenner 22 Luft über das Ventil 23 bzw. das Regelventil 24 während der Aufheizperiode des Cowpers 6 in Pfeilrichtung 20 zugemischt. Während der Blaswindperiode strömt bei geschlossenem Ventil 23 vom Kaltwindgebläse 7 in Pfeilrichtung 25 bei geöffnetem Ventil 26 Kaltluft durch das Mauerwerk 6a und wird erhitzt. Während der Aufheizperiode für den Cowper 6 können daher Rauchgase höheren Druckes hinter dem Cowper 6 an der Abzweigung 27 bei geöffnetem Ventil 28 in Pfeilrichtung 29 durch

.....

das Regelventil 30 in die Rauchgasturbine 5 bzw. Rauchgas-Turbinenstufe 5a gegeben werden, wobei durch eine bessere Ausnutzung der gereinigten Gichtgase, indem diese bei höherem Druck verbrannt werden, eine höhere Ausbeute an Energie in der Rauchgas-Turbinenstufe 5a bzw. in der Rauchgasturbine 5 erzielt wird.

Die Regelung des Gegendruckes im Cowper 6 bzw. im Hochofen 1 erfolgt parallel, ausgehend von dem Drucksteuerventil PC über die Steuerleitungen 31 für die Turbine 4 bzw. für die Turbinenstufe 4a und über die Steuerleitung 32 für die Turbine 5 bzw. die Turbinenstufe 5a, wobei jeweils Stellmotoren "M" auf die Regelventile 30 bzw. 33 einwirken. Das Septum-Regelventil 8 ist an diesen Regelkreis über die Steuerleitung 32 angeschlossen.

Der Hochofen 1 weist einen eigenen Regelkreis 34 mit einem Kontrollorgan 35 für das Regelventil 36 auf, das dem Blaswindventil 37 vorgeschaltet ist.

Mannesmann Aktiengesellschaft 24. Sept. 1984

Mannesmannufer 2 22 284 - Fl/Schi

4000 Düsseldorf

---

Hochofenanlage

---

Patentansprüche

1. Hochofenanlage, insbesondere mit einem im Gegendruckverfahren betriebenen Hochofen, mit einer der Hochofen-Gicht nachgeordneten Grob- und Feinentstaubung und mit zumindest einer folgenden Turbinenstufe, außerdem mit einer Abzweigung für Gichtgas, das unter Beimischung in einem oder mehreren Cowpern verbrennbar ist, wobei den Cowpern mittels eines Kaltwindgebläses Kaltluft zuführbar ist und der im Cowper erzeugte Heißwind in die Düsenstöcke des Hochofens einführbar ist, dadurch gekennzeichnet, daß Gichtgas zur Beheizung der Cowper (6) zwischen der Feinentstaubung (3) und vor einer der Turbinen (4,5), d.h. vor der Entspannung, abzweigbar und im Cowper (6) unter Druck verbrennbar ist.

......

2. Hochofenanlage nach Anspruch 1,
dadurch gekennzeichnet,
daß die aus dem Cowper (6) ausströmenden Rauchgase einer Rauchgas-Turbinenstufe (5a) zuführbar sind.

3. Hochofenanlage nach den Ansprüchen 1 und 2,
dadurch gekennzeichnet,
daß einer selbständigen Rauchgasturbine (5) ein eigener Generator (11a) zugeordnet ist.

4. Hochofenanlage nach den Ansprüchen 1 bis 3,
dadurch gekennzeichnet,
daß die Regelung des Gegendrucks im Cowper (6) bzw. im Hochofen (1) parallel über die vorhandenen Turbinenstufen (4a,5a) oder über eine Gichtgasturbine (4) und über eine Rauchgasturbine (5) jeweils getrennt erfolgt.

• • • • •

1/1